# EUROPEAN PATENT SPECIFICATION

(11) **EP 4 575 570 B1**
(45) Date of publication and mention of the grant of the patent: **14.10.2026**
(21) Application number: 24209720.2
(22) Date of filing: 30.10.2024
(51) Int. Cl.: G01S 7/527, G01S 15/10, G01S 15/931

(54) **ULTRASONIC SENSOR, SIGNAL PROCESSING METHOD THEREOF, AND VEHICLE INCLUDING SAME**
ULTRASCHALLSENSOR, SIGNALVERARBEITUNGSVERFAHREN DAFÜR UND FAHRZEUG DAMIT
CAPTEUR ULTRASONORE, PROCÉDÉ DE TRAITEMENT DE SIGNAL ASSOCIÉ ET VÉHICULE LE COMPRENANT

(30) Priority: 20.12.2023 KR 20230187654
(43) Date of publication of application: 25.06.2025
(73) Proprietor: Hyundai Mobis Co., Ltd., Gangnam-gu Seoul 06141 (KR)
(72) Inventor: KIM, Dong Uk, 18470 Hwaseong-si (KR)
(74) Representative: Vossius & Partner Patentanwälte Rechtsanwälte mbB

(56) References cited:
- DE-A1- 102021 121 156

## Description

### CROSS-REFERENCE TO RELATED APPLICATION(S)

This application is based on and claims priority under 35 U.S.C. 119 to Korean Patent Application No. 10-2023-0187654, filed on December20, 2023, in the Korean Intellectual Property Office.

### BACKGROUND

### 1. Field

The present disclosure relates to an ultrasonic sensor and, more specifically, to an ultrasonic sensor which may efficiently process an envelope signal to provide data having improved sampling rate and amplitude resolution, a signal processing method thereof, and a vehicle including same.

### 2. Description of the Related Art

Various types of sensors to assist operation of a vehicle are installed in the vehicle, for example, an ultrasonic sensor for generating distance information is installed in the vehicle.

The ultrasonic sensor may generate ultrasonic waves to detect an object in a surrounding environment and measure a distance between the vehicle and the object to generate distance information.

Conventionally, an ultrasonic sensor generated distance information through signal processing and transmitted same to a vehicle controller. However, recently, in accordance with performance improvement of vehicle controllers, an ultrasonic sensor transmits an envelope signal to a vehicle controller and the vehicle controller generates distance information between a vehicle and a peripheral object, based on the envelope signal.

The ultrasonic sensor performs compression with respect to the envelope signal in order to transmit the envelope signal to the vehicle controller. In a conventional technology, the ultrasonic sensor compressed the entire envelope signal and thus a signal which is not valid for object detection is also subject to compression.

The foregoing background art amounts to technical information that the inventors had been in their possession to derive the present disclosure or acquired in the process of deriving the present disclosure, so shall not be necessarily construed as known technology that has been published to the public before the filing of the present disclosure.

DE 10 2021 121 156 A1 discloses a method for operating a trilateration-based ultrasonic sensor system with Kalman filtering and solution clustering.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

An embodiment provided by the present disclosure is contrived according to the aforementioned demand and has a technical task to provide an ultrasonic sensor which performs efficient compression by compressing an envelope signal valid for object detection as a compression target, a signal processing method thereof, and a vehicle including same.

Furthermore, an embodiment of the present disclosure has a technical task to provide an ultrasonic sensor capable of providing data of which sampling is performed with increased sampling rate and which has high resolution, a signal processing method thereof, and a vehicle including same.

Furthermore, an embodiment of the present disclosure has a technical task to provide an ultrasonic sensor capable of providing time stamp (sampling time stamp) data together with sampling data to allow accurate object detection, a signal processing method thereof, and a vehicle including same.

In order to achieve the technical task described above, the present disclosure may provide an ultrasonic sensor which may efficiently process an envelope signal to provide data having improved sampling rate and amplitude resolution, a signal processing method thereof, and a vehicle including same.

The present invention is defined by independent claims 1, 3, and 5; the dependent claims describe embodiments of the present invention.

According to the invention, an ultrasonic sensor includes: a transmission/reception interface configured to transmit an ultrasonic signal, based on a burst signal, and receive an echo signal with respect to the ultrasonic signal; a signal processor configured to detect an envelope signal from the burst signal and the echo signal; and a signal compressor configured to: compare the envelope signal with two preconfigured thresholds, based on a preconfigured sampling rate; and in response to a size of the envelope signal satisfying a preconfigured reference, generate a data frame including sizes of the envelope signal.

The signal compressor is further configured to: search the memory in response to a generation number of the time stamp data reaching a preconfigured reference number; and extract a size of the envelope signal and time stamp data matched to a level value preconfigured to be output, in response to the reference being satisfied so as to generate a data frame.

According to an example not covered by the claims, the signal compressor may be further configured to: compare the envelope signal with one threshold and store, in response to a size of the envelope signal at a sampling time point being greater than or equal to at least one of the threshold, a first level value, time stamp data related to the corresponding sampling time point, the size of the envelope signal, or any combination thereof.

The signal compressor may be further configured to store a second level value and time stamp data related to a corresponding sampling time point, in response to a size of the envelope signal being less than a threshold.

According to the invention, the signal compressor is further configured to, in response to a size of the envelope signal at a sampling time point falling between a first threshold and a second threshold greater than the first threshold, compare the envelope signal with at least two thresholds and store a first level value, time stamp data related to the corresponding sampling time point, and the size of the envelope signal.

The signal compressor is configured to: in response to a size of the envelope signal being less than the first threshold, store a second level value and time stamp data related to a corresponding sampling time point; and in response to the size of the envelope signal being greater than the second threshold, store a third level value and time stamp data related to a corresponding sampling time point.

The envelope signal may include a first envelope signal from the burst signal and a second envelope signal from the echo signal.

According to the invention, a signal processing method of an ultrasonic sensor, includes: transmitting an ultrasonic signal, based on a burst signal; receiving an echo signal with respect to the ultrasonic signal; detecting an envelope signal from the burst signal and the echo signal; comparing the envelope signal with two preconfigured thresholds, based on a preconfigured sampling rate; and generating a data frame including sizes of the envelope signal, in response to a size of the envelope signal satisfying a preconfigured reference.

The method further includes: searching the memory in response to a generation number of the time stamp data reaching a preconfigured reference number; and extracting a size of the envelope signal and time stamp data matched to a level value preconfigured to be output, in response to the reference being satisfied so as to generate a data frame.

According to an example not covered by the claims, the method may further include: comparing the envelope signal with one threshold and store, in response to a size of the envelope signal at a sampling time point being greater than or equal to at least one of the threshold, a first level value, time stamp data related to the corresponding sampling time point, the size of the envelope signal, or any combination thereof.

The method may further include: storing a second level value and time stamp data related to a corresponding sampling time point, in response to a size of the envelope signal being less than a threshold.

According to the invention, the method further includes: in response to a size of the envelope signal at a sampling time point falling between a first threshold and a second threshold greater than the first threshold, comparing the envelope signal with at least two thresholds and storing a first level value, time stamp data related to the corresponding sampling time point, and the size of the envelope signal.

The method further includes: in response to a size of the envelope signal being less than the first threshold, storing a second level value and time stamp data related to a corresponding sampling time point; and in response to the size of the envelope signal being greater than the second threshold, storing a third level value and time stamp data related to a corresponding sampling time point.

The envelope signal may include a first envelope signal from the burst signal and a second envelope signal from the echo signal.

According to the invention, a vehicle includes: a vehicle controller; and an ultrasonic sensor, wherein the ultrasonic sensor is configured to: receive an echo signal with respect to an ultrasonic signal transmitted based on a burst signal; detect an envelope signal from the burst signal and the echo signal; compare the envelope signal with two preconfigured thresholds, based on a preconfigured sampling rate; generate a data frame including sizes of the envelope signal, in response to a size of the envelope signal satisfying a preconfigured reference; and transmit the data frame to the vehicle controller.

The envelope signal may include a first envelope signal from the burst signal and a second envelope signal from the echo signal.

Advantageous effects of the present disclosure may not be limited to the above-mentioned effects.

The above-mentioned subjects to be solved, solutions thereto, and advantageous effects are not intended to limit the scope of protection which is defined by the appended claims.

### BRIEF DESCRIPTION OF THE DRAWINGS

The accompanying drawings are intended to provide a better understanding of embodiments of the present disclosure and provide embodiments along with detailed descriptions. However, the technical features of the present embodiment are not limited to specific drawings, and the features disclosed in each drawing may be combined to form a new embodiment.
FIG. 1 is a view illustrating a vehicle 1 including an ultrasonic sensor 100 according to an embodiment of the present disclosure;
FIG. 2 is a view illustrating a configuration of an ultrasonic sensor 100 according to an embodiment of the present disclosure;
FIG. 3 is a view illustrating an example in which one threshold is applied to an envelope signal according to an embodiment of the present disclosure;
FIG. 4 is a view illustrating an example in which two thresholds are applied to an envelope signal according to an embodiment of the present disclosure;
FIG. 5 is a view illustrating an example in which one variable threshold is applied to an envelope signal according to an embodiment of the present disclosure;
FIG. 6 is a view illustrating an example in which one variable threshold and one predetermined threshold are applied to an envelope signal according to an embodiment of the present disclosure;
FIG. 7 is a view illustrating a structure of a data frame generated according to an embodiment of the present disclosure; and
FIG. 8 is a view illustrating a method of an ultrasonic sensor for processing a signal according to an embodiment of the present disclosure.

### DETAILED DESCRIPTION

The advantages and features of the present disclosure and ways to achieve them will be apparent by making reference to embodiments as described below in detail in conjunction with the accompanying drawings. The following embodiments are provided only to completely set forth the disclosure and inform those skilled in the art of the scope of the present disclosure, and the present invention is defined only by the scope of the appended claims.

Shapes, sizes, ratios, angles, and numbers disclosed in the drawings for explanation of embodiments of the present disclosure are provided merely by way of example. Throughout the specification, the same or like reference signs indicate the same or like elements. Furthermore, in describing the present disclosure, when it is determined that the detailed description of the known relevant arts unnecessarily obscures the subject matter of the present disclosure, the detailed description will be omitted. In the case where the expressions "comprise," "have," and "include" mentioned in the specification are used, another part may be added unless the term "only" ' is used. An element expressed in a singular form may include plural forms unless definitely indicated otherwise.

In construing an element, the element is to be construed as covering an error range although there is no explicit description of the error range.

In describing a temporal relationship, when a temporal order is described using, for example, "after," "subsequent to," "next to," or "before," the temporal order may include cases which are not continuous unless the term "just" or "immediately" is used.

The terms "first," "second," and the like may be used to describe various elements, but the elements are not limited by these terms. These terms are used merely to distinguish one element from the others. Therefore, a first element as used in the following description may be a second element without departing from the present disclosure.

In describing the elements of the present disclosure, such terms as "first," "second," "A," "B," "(a)," and "(b)" may be used. These terms are used merely to discern the corresponding elements from the other elements, and the essence, sequence, order, or number of the corresponding elements are not limited by the terms. It will be understood that when an element is referred to as being "connected to" or "coupled to" another element, the element may be directly connected to or coupled to the other element, but yet another element may be interposed between the respective elements that may be connected or coupled indirectly to each other.

The term "at least one" should be understood as including any or all combinations of one or more of the associated elements enumerated. For example, "at least one of a first element, a second element, and a third element" may mean not only the first element, the second element, or the third element, but also all combinations of two or more of the first element, the second element, and the third element.

The respective features of various embodiments of the present disclosure may be partially or entirely coupled to or combined with each other and may be technically linked and inter-operated with each other in various manners, and the respective embodiments of the present disclosure may be carried out independently of each other or may be carried out in association with each other.

For the convenience of description, the scale of elements illustrated in the drawings may differ from the real scale, and thus the elements are not limited by the scale illustrated in the drawings.

Hereinafter, an ultrasonic sensor, a signal processing method thereof, and a vehicle including same according to an embodiment of the present disclosure will be described with reference to the accompanying drawings.

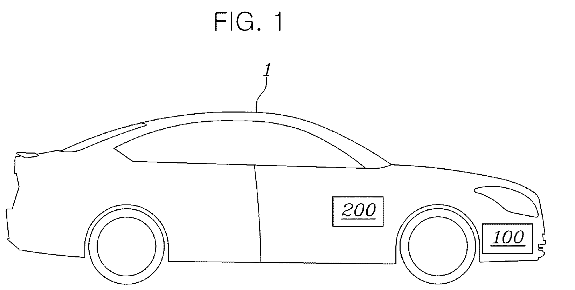

FIG. 1 is a view illustrating a vehicle 1 including an ultrasonic sensor 100 according to an embodiment of the present disclosure.

Referring to FIG. 1, the vehicle 1 may include the ultrasonic sensor 100 according to an embodiment of the present disclosure.

For example, the vehicle 1 may include an electric vehicle (EV), a hybrid electric vehicle (HEV), a plug-in hybrid electric vehicle (PHEV), a hydrogen fuel cell electric vehicle (FCEV), and the like, but the type of the vehicle 1 is not limited thereto.

The vehicle 1 may include a vehicle controller 200 mounted thereon, which is linked to the ultrasonic sensor 100 and generates information on a distance between the vehicle 1 and an object around the vehicle, based on data provided from the ultrasonic sensor 100.

The ultrasonic sensor 100 may transmit an ultrasonic signal and receive an echo signal reflected by an object around the vehicle.

The ultrasonic sensor 100 may process the received echo signal to generate an envelope signal, compress the generated envelope signal, and output compression data to the vehicle controller 200.

As shown in FIG. 1, the ultrasonic sensor 100 may be installed at the front of the vehicle 1, but the installation location of the ultrasonic sensor 100 is not limited thereto. For example, the ultrasonic sensor 100 may be installed on at least one of the front, rear, left, and right sides of the vehicle 1. For example, the ultrasonic sensor 100 may be installed on a bumper, a grill, and/or a door of the vehicle 1.

According to an embodiment, the ultrasonic sensor 100 may target, for compression, a signal in an area valid for object detection from the envelope signal generated by processing the echo signal and generate compression data.

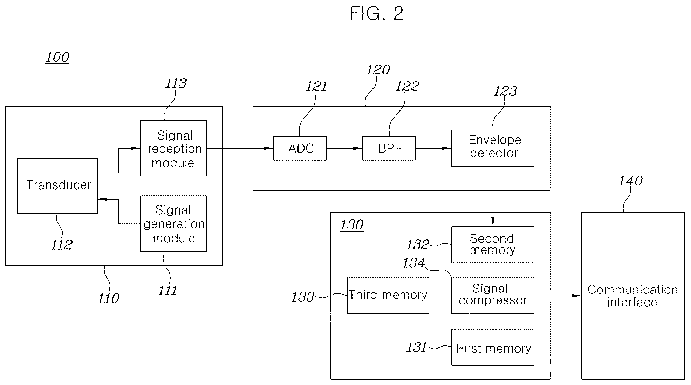

FIG. 2 is a view illustrating a configuration of an ultrasonic sensor 100 according to an embodiment of the present disclosure.

Referring to FIGS. 1 and 2, the ultrasonic sensor 100 may include a transmission/reception interface 110, a signal processing module 120 (e.g., a signal processor), a signal compression module 130 (e.g., a signal compressor), and a communication interface 140, but the configuration of the ultrasonic sensor 100 is not limited thereto.

The transmission/reception interface 110 may transmit an ultrasonic signal and receive an echo signal reflected by an object around the vehicle.

According to an embodiment, the transmission/reception interface 110 may include a signal generation module 111, a transducer 112, and a signal reception module 113, and the configuration of the transmission/reception interface 110 is not limited thereto.

The signal generation module 111 may generate an electrical signal (burst signal) having a preconfigured frequency in response to a preconfigured transmission period.

The transducer 112 may convert the electrical signal generated from the signal generation module 111 into a physical vibration to transmit an ultrasonic signal and receive an echo signal reflected by an object around the vehicle and returned therefrom to convert the echo signal into an electrical signal in analog waveform.

The signal reception module 113 may receive a burst signal generated by the signal generation module 111 and an echo signal transferred from the transducer 112. For example, the signal reception module 113 may amplify received electrical signals according to a preconfigured gain.

For example, the signal generation module 111 may include a clock generation module configured to generate a clock signal according to a predetermined period, a signal generator configured to generate an electrical signal (burst signal) having a predetermined frequency in response to the clock signal, and a driver configured to drive the transducer 112, based on the electrical signal generated by the signal generator, and the configuration of the signal generation module 111 is not limited thereto.

For example, the signal reception module 113 may include a programmable gain amplifier (PGA) and the configuration of the signal reception module 113 is not limited thereto.

The signal processing module 120 may detect an envelope signal from a burst signal and an echo signal transferred from the signal reception module 113 of the transmission/reception interface 110.

According to an embodiment, the signal processing module 120 may convert a burst signal and an echo signal in an analog form to have a digital form, then cause the signals to pass through a band pass filter to generate a sine wave, and detect an envelope signal, based on the generated sine wave.

To this end, the signal processing module 120 may include an analog-digital converter (ADC) 121, a band pass filter (BPG) 122, and an envelope detector 123, and the configuration of the signal processing module 120 is not limited thereto.

The ADC 121 may convert an electrical signal in an analog waveform transferred from the signal reception module 113 of the transmission/reception interface 110 into a digital signal.

The **BPF** 122 may convert a digital signal transferred from the ADC 121 into a sine signal, and the envelope detector 123 may detect an envelope signal from a signal transferred from the BPF 122.

According to an embodiment, the signal processing module 120 may transfer the detected envelope signal to the signal compression module 130.

The signal compression module 130 may extract a signal in an area valid for object detection from the envelope signal transferred from the signal processing module 120 and compress the signal.

According to an embodiment, the signal compression module 130 may include a first memory 131, a second memory 132, a third memory 133, and a signal compressor 134, and the configuration of the signal compression module 130 is not limited thereto.

The first memory 131 may store an algorithm (e.g., a signal compression algorithm, a data frame generation algorithm, or the like), configuration values (e.g., thresholds, a sampling rate, or the like), data frame format information, and the like required to operate the signal compressor 134.

The second memory 132 may store an envelope signal transferred from the signal processing module 120. The third memory 133 may store data transferred from the signal compressor 134.

For example, the first to third memories 131, 132, and 133 may include a volatile memory and/or a non-volatile memory. The volatile memory may include a dynamic random-access memory (DRAM), a static RAM (SRAM), a synchronous DRAM (SDRAM), a phase-change RAM (PRAM), a magnetic RAM (MRAM), a resistive RAM (RRAM), a ferroelectric RAM

(FeRAM), a data boosting (DBM) memory), and the like. The non-volatile memory may include a magnetic random-access memory (MRAM), a read only memory (ROM), programmable ROM (PROM), an electrically programmable ROM (EPROM), an electrically erasable programmable ROM (EEPROM), flash memory, and the like.

The signal compressor 134 according to an embodiment may be implemented as at least one processor and may extract a signal (hereinafter, a detection valid signal) of an area valid for object detection from an envelope signal, based on the algorithm and the configuration values stored in the first memory 131.

For example, the processor may correspond to a data processing device implemented as hardware having a circuit of a physical structure to execute desired operations. For example, the desired operations may include codes or instructions included in a program. For example, the data processing device implemented as hardware may include a microprocessor, a central processing unit, a processor core, a multi-core processor, a multiprocessor, an application-specific integrated circuit (ASIC), and a field programmable gate array (FPGA).

The signal compressor 134 may extract, in an example not covered by the claims, a detection valid signal from an envelope signal, based on one threshold. According to the invention, it extracts a detection valid signal from an envelope signal, based on multiple thresholds.

In the case not covered by the claims of extracting a detection valid signal from an envelope signal, based on one threshold, the signal compressor 134 may compare a preconfigured threshold with a size (amplitude) of an envelope signal at a sampling time point on the basis of a preconfigured sampling rate.

According to an embodiment, the signal compressor 134 may output one level value from among output two level values depending on a comparison result.

For example, the signal compressor 134 may output, when a size of an envelope signal at a corresponding sampling time point is equal to or greater than a threshold, a first level value (e.g., 1), and output, when a size of an envelope signal at a corresponding sampling time point is less than the threshold, a second level value (e.g., 0).

According to an embodiment, the signal compressor 134 may generate time stamp data for all sampling time points and match the time stamp data and an output level value to be stored in the third memory 133.

According to an embodiment, the signal compressor 134 may generate, when a size of an envelope signal is equal to or greater than a threshold, time stamp data for a sampling time point. In addition, the signal compressor 134 may extract, when a size of an envelope signal is equal to or greater than a threshold, a size of an envelope signal at a corresponding sampling time point.

The signal compressor 134 may match time stamp data, an output level value, and a size of an envelope signal to be stored in the third memory 133.

According to an embodiment, the signal compressor 134 may perform counting whenever time stamp data is generated.

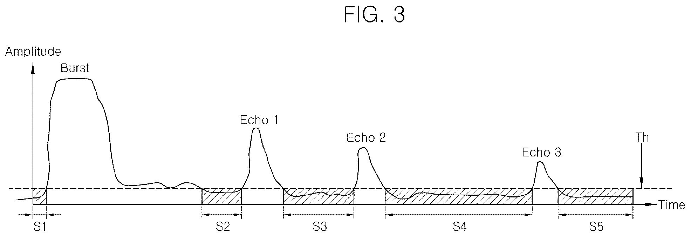

FIG. 3 is a view illustrating an example in which one threshold is applied to an envelope signal.

Referring to FIG. 3, the signal compressor 134 may not extract a size of an envelope signal with respect to areas S1, S2, S3, S4, and S5 of the envelope signal, having a size less than a threshold th.

According to an embodiment, a signal of areas S1, S2, S3, S4, and S5 not extracted may not be included in a data frame transmitted to the vehicle controller 200. As such, the signal compressor 134 may not extract data not satisfying a reference and accordingly, a data compression effect may occur.

In the case according to the invention of extracting a detection valid signal from an envelope signal on the basis of multiple thresholds, the signal compressor 134 outputs, when a size of an envelope signal at a sampling time point is less than a preconfigured first threshold, a second level value (e.g., 0) on the basis of a preconfigured sampling rate.

Furthermore, the signal compressor 134 outputs, when a size of an envelope signal at a sampling time point is greater than a second threshold preconfigured to have a value greater than the first threshold, a third level value (e.g., 2), and outputs, when a size of an envelope signal at the sampling time point is equal to or greater than the first threshold and equal to or less than the second threshold, that is, between the first threshold and the second threshold, a first level value (e.g., 1).

According to an embodiment, the signal compressor 134 may generate time stamp data for all sampling time points and match the time stamp data and an output level value to be stored in the third memory 133.

According to the invention, the signal compressor 134 generates, when a size of an envelope signal is between the first threshold and the second threshold, time stamp data for a sampling time point. In addition, the signal compressor 134 extracts, when a size of an envelope signal is between the first threshold and the second threshold, a size of the envelope signal.

The signal compressor 134 may match time stamp data, an output level value, and a size of an envelope signal to be stored in the third memory 133.

According to the invention, the signal compressor 134 performs counting whenever time stamp data is generated.

According to an embodiment, the third memory 133 may store a data set in which time stamp data and an output level value are matched and a data set in which time stamp data, an output level value, and a size of an envelope signal are matched.

According to an embodiment, the third memory 133 may store a data set in which a time stamp, an output level value, and a size of an envelope signal are matched.

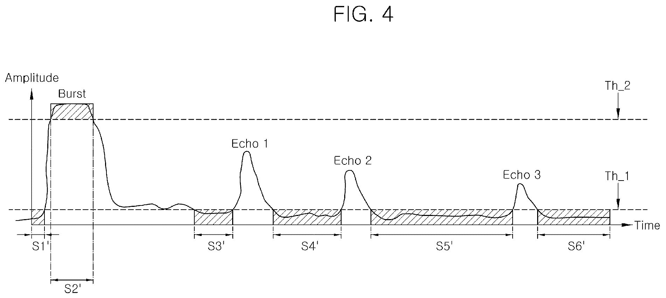

FIG. 4 is a view illustrating the invention in which two thresholds are applied to an envelope signal.

Referring to FIG. 4, the signal compressor 134 may not extract a size of an envelope signal with respect to areas S1', S3', S4', S5', and S6' of the envelope signal, having a size less than a first threshold Th_1 and an area S2' having a size greater than a second threshold Th_2.

According to an embodiment, a signal of areas S1', S2', S3', S4', S5', and S6' not extracted may not be included in a data frame transmitted to the vehicle controller 200. As such, the signal compressor 134 may not extract data not satisfying a reference and accordingly, a data compression effect may occur.

Meanwhile, FIGS. 3 and 4 show the example in which the thresholds Th, Th_1, and Th-2 remain constant, but the present disclosure is not limited thereto.

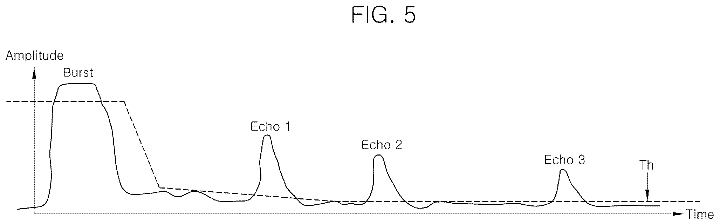

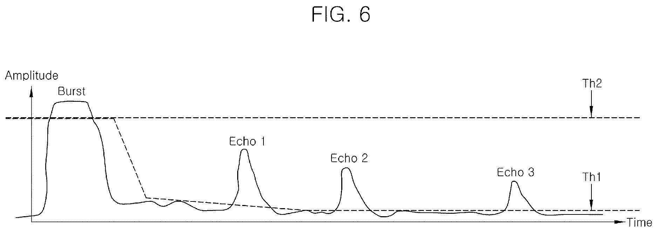

FIG. 5 is a view illustrating an example in which one variable threshold is applied to an envelope signal according to an embodiment of the present disclosure, and FIG. 6 is a view illustrating an example in which one variable threshold and one predetermined threshold are applied to an envelope signal according to an embodiment of the present disclosure.

As shown in FIGS. 5 and 6, the threshold applied to an envelope signal may be constant (Th_2 in FIG. 6) or variable (Th in FIG. 5 and Th_1 in FIG. 6).

FIG. 6 shows an example in which a first threshold Th_1 is variable and a second threshold Th_2 is constant, but the present disclosure is not limited thereto. For example, the first threshold Th_1 may be constant and the second threshold Th-2 may be variable. For example, both the first threshold Th_1 and the second threshold Th-2 may be variable.

In case that a preconfigured condition is satisfied, the signal compressor 134 may generate a data frame including data stored in the third memory 133 and output the data frame to the communication interface 140.

According to an embodiment, in case that a time stamp generation number satisfies a preconfigured reference number, the signal compressor 134 may generate a data frame including data stored in the third memory 133. The reference number is not limited to a specific value and may be changeable according to a configuration.

The signal compressor 134 may sequentially retrieve the number of data sets corresponding to the reference number from the third memory 133, extract a size of an envelope signal and time stamp data from a corresponding data set in which an output level value has a preconfigured level value (e.g., a first level value), and generate a data frame on the basis of the extracted size of the envelope signal and time stamp data.

According to an embodiment, the signal compressor 134 may generate a data set on the basis of a DSI3 protocol but is not limited thereto.

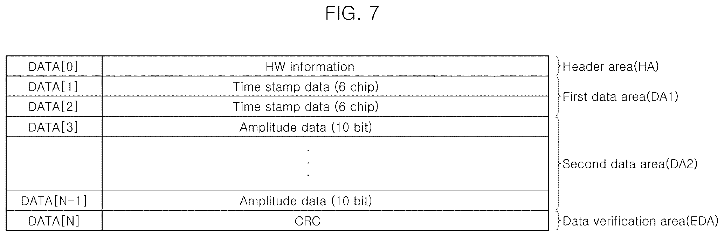

FIG. 7 is a view illustrating a structure of a data frame generated according to an embodiment of the present disclosure.

Referring to FIG. 7, the data frame according to an embodiment of the present disclosure may include a header area HA including information of the ultrasonic sensor, a first data area DA1 including time stamp data, a second data area DA2 including a size of an envelope signal, and a data verification area (EDA) including a cyclic redundancy check code.

The structure of the data frame generated by the ultrasonic sensor 1 of the present disclosure is not limited to the structure in FIG. 7.

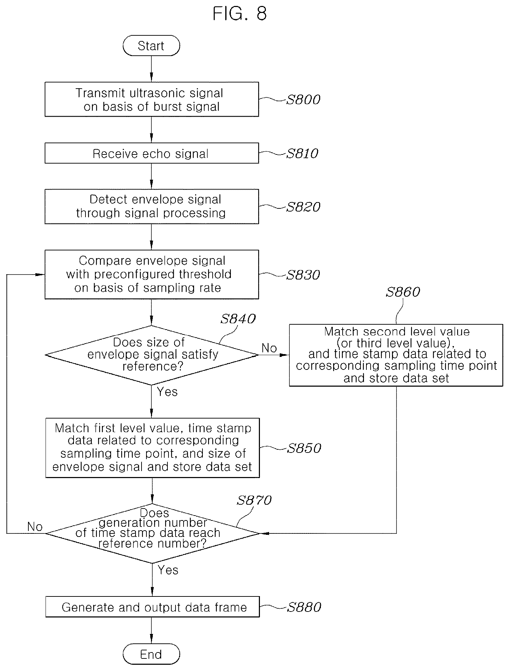

FIG. 8 is a view illustrating a method of an ultrasonic sensor for processing a signal according to an embodiment of the present disclosure.

The stepwise operations described in FIG. 8 may be performed by the ultrasonic sensor 100 described with reference to FIGS. 1 to 7.

Referring to FIGS. 1 to 8, the ultrasonic sensor 100 transmits an ultrasonic signal on the basis of a burst signal by using transducer 112 (S800) and receives an echo signal (S810).

Thereafter, the ultrasonic sensor 100 detects an envelope signal from the bust signal and the echo signal through signal processing (S820).

Thereafter, in an example not covered by the claims, the ultrasonic sensor 100 may compare the envelope signal with a preconfigured threshold on the basis of a preconfigured sampling rate (S830) and determine whether a size of the envelope signal satisfies a reference (S840).

In case of satisfying a determination result reference in operation S840 (S840-Yes), the ultrasonic sensor 100 may match a preconfigured first level value (e.g., 1), time stamp data related to a corresponding sampling time point, and a size of an envelope signal and generate and store a data set (S850).

The ultrasonic sensor 100 may count a generation number whenever time stamp data is generated.

According to an embodiment, the ultrasonic sensor 100 may compare an envelope signal with one threshold Th, match, when a size of the envelope signal at a sampling time point is greater than or equal to the threshold Th, a first level value, time stamp data related to the corresponding sampling time point, and the size of the envelope signal, and generate a data set.

According to the invention, the ultrasonic sensor 100 compares an envelope signal with two thresholds Th_1 and Th_2 (Th_1 < Th_2), matches, when a size of the envelope signal at a sampling time point is between a first threshold Th_1 and a second threshold Th_2, a first level value, time stamp data related to the corresponding sampling time point, and the size of the envelope signal, and generates a data set.

In case of not satisfying a determination result reference in operation S840 (S840-No), the ultrasonic sensor 100 generates a preconfigured second level value (e.g., 0) or a third level value (e.g., 2) and time stamp data related to a corresponding sampling time point and stores same (S860).

The ultrasonic sensor 100 counts a generation number whenever time stamp data is generated.

According to an example not covered by the claims, the ultrasonic sensor 100 may compare an envelope signal with one threshold Th, match, when a size of the envelope signal at a sampling time point is less than the threshold Th, a second level value and time stamp data related to the corresponding sampling time point, and generate a data set.

According to the invention, the ultrasonic sensor 100 compares an envelope signal with two thresholds Th_1 and Th_2, matches, when a size of the envelope signal at a sampling time point is less than the first threshold Th_1, the second level value and time stamp data related to a corresponding sampling time point to store a data set, and matches, when a size of the envelope signal at a sampling time point is greater than the second threshold Th_2, a third level value and time stamp data related to a corresponding sampling time point to store data set.

Thereafter, the ultrasonic sensor 100 determines whether the generation number of time stamp data has reached a reference number (S870).

In case that the generation number of time stamp data has reached the reference number (S870_Yes), the ultrasonic sensor 100 sequentially retrieves the number of data sets corresponding to the reference number from the third memory 134, extracts a size of an envelope signal and time stamp data from a corresponding data set in which a level value has a preconfigured level value (e.g., a first level value), and generates a data frame on the basis of the extracted size of the envelope signal and time stamp data to be output to the vehicle controller 200 (S880).

In case that the generation number of time stamp data has not reached the reference number (S870_No), the ultrasonic sensor 100 may perform operation S830 and compare the envelope signal and a preconfigured threshold on the basis of a sampling rate.

Although embodiments of the present disclosure have been described above with reference to the accompanying drawings, the present disclosure is not necessarily limited to these embodiments and various modifications and changes may be made thereto. Therefore, the embodiments disclosed herein are intended to explain the technical idea of the present disclosure. Accordingly, the embodiments as described above should be construed as being illustrative and non- limitative in all aspects. The scope of protection of the present invention is defined by the appended claims.

## Claims

1. An ultrasonic sensor (100) comprising:
a transmission/reception interface (110) configured to transmit an ultrasonic signal, based on a burst signal, and receive an echo signal with respect to the ultrasonic signal;
a signal processor configured to detect an envelope signal from the burst signal and the echo signal; and
a signal compressor (134);
**characterized in that** the signal compressor (134) is configured to:
in response to a size of the envelope signal represented by an amplitude of the envelope signal at a sampling time point falling between a preconfigured first threshold and a preconfigured second threshold greater than the first threshold, compare the envelope signal with at least the first and second thresholds and store a first level value, time stamp data related to the corresponding sampling time point, and the size of the envelope signal in a memory;
in response to a size of the envelope signal being less than the first threshold, store a second level value and time stamp data related to a corresponding sampling time point in the memory; and
in response to the size of the envelope signal being greater than the second threshold, store a third level value and time stamp data related to a corresponding sampling time point in the memory;
perform counting whenever time stamp data is generated resulting in a generation number of the time stamp data;
search the memory in response to the generation number of the time stamp data reaching a preconfigured reference number; and
extract a size of the envelope signal and time stamp data matched to a level value preconfigured to be output, in response to the generation number of the time stamp data reaching the preconfigured reference number so as to generate a data frame.

2. The ultrasonic sensor (100) of claim 1, wherein the envelope signal comprises a first envelope signal from the burst signal and a second envelope signal from the echo signal.

3. A signal processing method of an ultrasonic sensor (100), the method comprising:
transmitting an ultrasonic signal, based on a burst signal;
receiving an echo signal with respect to the ultrasonic signal;
detecting an envelope signal from the burst signal and the echo signal;
**characterized by**
in response to a size of the envelope signal represented by an amplitude of the envelope signal at a sampling time point falling between a preconfigured first threshold and a preconfigured second threshold greater than the first threshold, comparing the envelope signal with at least the first and second thresholds and storing a first level value, time stamp data related to the corresponding sampling time point, and the size of the envelope signal in a memory,
in response to a size of the envelope signal being less than the preconfigured first threshold, storing a second level value and time stamp data related to a corresponding sampling time point in the memory; and
in response to the size of the envelope signal being greater than the second threshold,
storing a third level value and time stamp data related to a corresponding sampling time point in the memory;
performing counting whenever time stamp data is generated resulting in a generation number of the time stamp data;
searching the memory in response to the generation number of the time stamp data reaching a preconfigured reference number; and
extracting a size of the envelope signal and time stamp data matched to a level value preconfigured to be output, in response to the generation number of the time stamp data reaching the preconfigured reference number so as to generate a data frame.

4. The method of claim 3, wherein the envelope signal comprises a first envelope signal from the burst signal and a second envelope signal from the echo signal.

5. A vehicle comprising:
a vehicle controller (200); and
an ultrasonic sensor (100),
wherein the ultrasonic sensor (100) is configured to perform the method of claim 3 or 4 and to transmit the data frame to the vehicle controller (200).

## Patentansprüche

1. Ultraschallsensor (100), aufweisend:
eine Sende-/Empfangsschnittstelle (110), die dazu eingerichtet ist, auf Grundlage eines Burstsignals ein Ultraschallsignal zu senden und ein Echosignal in Bezug auf das Ultraschallsignal zu empfangen;
einen Signalprozessor, der dazu eingerichtet ist, aus dem Burstsignal und dem Echosignal ein Hüllkurvensignal zu detektieren; und
einen Signalkompressor (134);
**dadurch gekennzeichnet, dass** der Signalkompressor (134) dazu eingerichtet ist:
als Reaktion darauf, dass eine Größe des Hüllkurvensignals, die durch eine Amplitude des Hüllkurvensignals an einem Abtastzeitpunkt dargestellt wird, zwischen einem vorkonfigurierten ersten Schwellenwert und einem vorkonfigurierten zweiten Schwellenwert liegt, der größer als der erste Schwellenwert ist, das Hüllkurvensignal mit zumindest dem ersten und dem zweiten Schwellenwert zu vergleichen und einen ersten Pegelwert, auf den entsprechenden Abtastzeitpunkt bezogene Zeitstempeldaten und die Größe des Hüllkurvensignals in einem Speicher zu speichern;
als Reaktion darauf, dass eine Größe des Hüllkurvensignals kleiner als der erste Schwellenwert ist, einen zweiten Pegelwert und auf einen entsprechenden Abtastzeitpunkt bezogene Zeitstempeldaten in dem Speicher zu speichern; und
als Reaktion darauf, dass die Größe des Hüllkurvensignals größer als der zweite Schwellenwert ist, einen dritten Pegelwert und auf einen entsprechenden Abtastzeitpunkt bezogene Zeitstempeldaten in dem Speicher zu speichern;
jedes Mal, wenn Zeitstempeldaten erzeugt werden, eine Zählung durchzuführen, wodurch sich eine Erzeugungszahl der Zeitstempeldaten ergibt;
den Speicher als Reaktion darauf zu durchsuchen, dass die Erzeugungszahl der Zeitstempeldaten eine vorkonfigurierte Referenzzahl erreicht; und
als Reaktion darauf, dass die Erzeugungszahl der Zeitstempeldaten die vorkonfigurierte Referenzzahl erreicht, eine Größe des Hüllkurvensignals und Zeitstempeldaten, die einem zur Ausgabe vorkonfigurierten Pegelwert entsprechen, zu extrahieren, um einen Datenrahmen zu erzeugen.

2. Ultraschallsensor (100) nach Anspruch 1, wobei das Hüllkurvensignal ein erstes Hüllkurvensignal aus dem Burstsignal und ein zweites Hüllkurvensignal aus dem Echosignal aufweist.

3. Signalverarbeitungsverfahren eines Ultraschallsensors (100), wobei das Verfahren aufweist:
Senden eines Ultraschallsignals auf Grundlage eines Burstsignals;
Empfangen eines Echosignals in Bezug auf das Ultraschallsignal;
Detektieren eines Hüllkurvensignals aus dem Burstsignal und dem Echosignal;
**gekennzeichnet durch**:
als Reaktion darauf, dass eine Größe des Hüllkurvensignals, die durch eine Amplitude des Hüllkurvensignals an einem Abtastzeitpunkt dargestellt wird, zwischen einem vorkonfigurierten ersten Schwellenwert und einem vorkonfigurierten zweiten Schwellenwert liegt, der größer als der erste Schwellenwert ist, das Vergleichen des Hüllkurvensignals mit zumindest dem ersten und dem zweiten Schwellenwert und das Speichern eines ersten Pegelwerts, auf den entsprechenden Abtastzeitpunkt bezogener Zeitstempeldaten und der Größe des Hüllkurvensignals in einem Speicher,
als Reaktion darauf, dass eine Größe des Hüllkurvensignals kleiner als der vorkonfigurierte erste Schwellenwert ist, das Speichern eines zweiten Pegelwerts und auf einen entsprechenden Abtastzeitpunkt bezogener Zeitstempeldaten in dem Speicher; und
als Reaktion darauf, dass die Größe des Hüllkurvensignals größer als der zweite Schwellenwert ist, das Speichern eines dritten Pegelwerts und auf einen entsprechenden Abtastzeitpunkt bezogener Zeitstempeldaten in dem Speicher;
das Durchführen einer Zählung jedes Mal, wenn Zeitstempeldaten erzeugt werden, wodurch sich eine Erzeugungszahl der Zeitstempeldaten ergibt;
das Durchsuchen des Speichers als Reaktion darauf, dass die Erzeugungszahl der Zeitstempeldaten eine vorkonfigurierte Referenzzahl erreicht; und
das Extrahieren einer Größe des Hüllkurvensignals und von Zeitstempeldaten, die einem zur Ausgabe vorkonfigurierten Pegelwert entsprechen, als Reaktion darauf, dass die Erzeugungszahl der Zeitstempeldaten die vorkonfigurierte Referenzzahl erreicht, um einen Datenrahmen zu erzeugen.

4. Verfahren nach Anspruch 3, wobei das Hüllkurvensignal ein erstes Hüllkurvensignal aus dem Burstsignal und ein zweites Hüllkurvensignal aus dem Echosignal aufweist.

5. Fahrzeug, aufweisend:
ein Fahrzeugsteuergerät (200); und
einen Ultraschallsensor (100),
wobei der Ultraschallsensor (100) dazu eingerichtet ist, das Verfahren nach Anspruch 3 oder 4 durchzuführen und den Datenrahmen an das Fahrzeugsteuergerät (200) zu übertragen.

## Revendications

1. Capteur à ultrasons (100) comprenant :
une interface d'émission/réception (110) configurée pour émettre un signal ultrasonore, sur la base d'un signal en salve, et recevoir un signal d'écho relatif au signal ultrasonore ;
un processeur de signal configuré pour détecter un signal d'enveloppe à partir du signal en salve et du signal d'écho ; et
un compresseur de signal (134) ;
**caractérisé en ce que** le compresseur de signal (134) est configuré pour :
en réponse au fait qu'une grandeur du signal d'enveloppe, représentée par une amplitude du signal d'enveloppe à un instant d'échantillonnage, se situe entre un premier seuil préconfiguré et un deuxième seuil préconfiguré supérieur au premier seuil, comparer le signal d'enveloppe avec au moins les premier et deuxième seuils et stocker une première valeur de niveau, des données d'horodatage relatives à l'instant d'échantillonnage correspondant et la grandeur du signal d'enveloppe dans une mémoire ;
en réponse au fait qu'une grandeur du signal d'enveloppe est inférieure au premier seuil, stocker une deuxième valeur de niveau et des données d'horodatage relatives à un instant d'échantillonnage correspondant dans la mémoire ; et
en réponse au fait que la grandeur du signal d'enveloppe est supérieure au deuxième seuil, stocker une troisième valeur de niveau et des données d'horodatage relatives à un instant d'échantillonnage correspondant dans la mémoire ;
effectuer un comptage chaque fois que des données d'horodatage sont générées, ce qui donne un nombre de générations des données d'horodatage ;
rechercher dans la mémoire en réponse au fait que le nombre de générations des données d'horodatage atteint un nombre de référence préconfiguré ; et
extraire une grandeur du signal d'enveloppe et des données d'horodatage correspondant à une valeur de niveau préconfigurée pour être délivrée en sortie, en réponse au fait que le nombre de générations des données d'horodatage atteint le nombre de référence préconfiguré, de manière à générer une trame de données.

2. Capteur à ultrasons (100) selon la revendication 1, dans lequel le signal d'enveloppe comprend un premier signal d'enveloppe provenant du signal en salve et un deuxième signal d'enveloppe provenant du signal d'écho.

3. Procédé de traitement de signal d'un capteur à ultrasons (100), le procédé comprenant :
l'émission d'un signal ultrasonore sur la base d'un signal en salve ;
la réception d'un signal d'écho relatif au signal ultrasonore ;
la détection d'un signal d'enveloppe à partir du signal en salve et du signal d'écho ;
**caractérisé par** :
en réponse au fait qu'une grandeur du signal d'enveloppe, représentée par une amplitude du signal d'enveloppe à un instant d'échantillonnage, se situe entre un premier seuil préconfiguré et un deuxième seuil préconfiguré supérieur au premier seuil, la comparaison du signal d'enveloppe avec au moins les premier et deuxième seuils et le stockage d'une première valeur de niveau, de données d'horodatage relatives à l'instant d'échantillonnage correspondant et de la grandeur du signal d'enveloppe dans une mémoire,
en réponse au fait qu'une grandeur du signal d'enveloppe est inférieure au premier seuil préconfiguré, le stockage d'une deuxième valeur de niveau et de données d'horodatage relatives à un instant d'échantillonnage correspondant dans la mémoire ; et
en réponse au fait que la grandeur du signal d'enveloppe est supérieure au deuxième seuil, le stockage d'une troisième valeur de niveau et de données d'horodatage relatives à un instant d'échantillonnage correspondant dans la mémoire;
l'exécution d'un comptage chaque fois que des données d'horodatage sont générées, ce qui donne un nombre de générations des données d'horodatage ;
la recherche dans la mémoire en réponse au fait que le nombre de générations des données d'horodatage atteint un nombre de référence préconfiguré ; et
l'extraction d'une grandeur du signal d'enveloppe et de données d'horodatage correspondant à une valeur de niveau préconfigurée pour être délivrée en sortie, en réponse au fait que le nombre de générations des données d'horodatage atteint le nombre de référence préconfiguré, de manière à générer une trame de données.

4. Procédé selon la revendication 3, dans lequel le signal d'enveloppe comprend un premier signal d'enveloppe provenant du signal en salve et un deuxième signal d'enveloppe provenant du signal d'écho.

5. Véhicule comprenant :
un contrôleur de véhicule (200) ; et
un capteur à ultrasons (100),
dans lequel le capteur à ultrasons (100) est configuré pour mettre en œuvre le procédé selon la revendication 3 ou 4 et pour transmettre la trame de données au contrôleur de véhicule (200).
